(19) Europäisches Patentamt / European Patent Office / Office européen des brevets

(11) EP 4 317 202 A1

(12) EUROPEAN PATENT APPLICATION
published in accordance with Art. 153(4) EPC

(43) Date of publication:
**07.02.2024 Bulletin 2024/06**

(21) Application number: **22779371.8**

(22) Date of filing: **14.01.2022**

(51) International Patent Classification (IPC):
***C08F 8/00*** (2006.01) ***C08F 8/46*** (2006.01) ***C08F 210/16*** (2006.01) ***C08F 255/02*** (2006.01) ***C08L 23/26*** (2006.01) ***C08L 51/06*** (2006.01) ***C08L 77/00*** (2006.01)

(52) Cooperative Patent Classification (CPC):
**C08F 8/00; C08F 8/46; C08F 210/16; C08F 255/02; C08L 23/26; C08L 51/06; C08L 77/00;** B29B 7/007; B29B 7/726

(86) International application number:
**PCT/JP2022/001030**

(87) International publication number:
**WO 2022/209138 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2021 JP 2021056224**

(71) Applicant: **Mitsui Chemicals, Inc.**
**Tokyo 104-0028 (JP)**

(72) Inventors:
- **KOKIDO Fumihiko**
**Ichihara-shi, Chiba 299-0108 (JP)**
- **NOZAKI Shuhei**
**Ichihara-shi, Chiba 299-0108 (JP)**
- **KUBOTA Naoya**
**Ichihara-shi, Chiba 299-0108 (JP)**
- **NAKAMURA Tetsuya**
**Ichihara-shi, Chiba 299-0108 (JP)**

(74) Representative: **Hoffmann Eitle**
**Patent- und Rechtsanwälte PartmbB**
**Arabellastraße 30**
**81925 München (DE)**

# (54) GRAFT-MODIFIED ETHYLENE POLYMER, POLYAMIDE COMPOSITION INCLUDING GRAFT-MODIFIED ETHYLENE POLYMER, AND USE THEREFOR

(57) An object of the present invention is to obtain a suitable graft-modified ethylene/α-olefin copolymer as an impact modifier of engineering plastic such as polyamides and to obtain a polyamide composition having further improved impact resistance, particularly, impact resistance at low temperatures, and the present invention relates to a graft-modified ethylene-based polymer (X) formed by graft modification of an ethylene/α-olefin copolymer (A) satisfying requirements (A-i) to (A-iv) below with a polar compound.

(A-i) A content of a structural unit (a) derived from ethylene is 51 to 99 mol%, and a content of a structural unit (b) derived from an α-olefin having 5 to 20 carbon atoms is within a range of 1 to 49 mol% [provided that the sum of the structural unit (a) and the structural unit (b) is 100 mol%].

(A-ii) A density is within a range of 0.850 to 0.875 g/cm$^3$.

(A-iii) A melt flow rate (MFR) at 190°C and at a load of 2.16 kg is within a range of 0.1 to 25 g/10 min.

(A-iv) A sum of the numbers of a vinyl-type double bond, a vinylidene-type double bond, a disubstituted olefin-type double bond and a trisubstituted olefin-type double bond per 1000 carbon atoms obtained by $^1$H-NMR is 0.16 to 1.00.

EP 4 317 202 A1

## Description

### Technical Field

The present invention relates to a graft-modified ethylene/α-olefin copolymer having excellent impact resistance, a polyamide composition containing the graft-modified ethylene/α-olefin copolymer and an application thereof.

### Background Art

Polyamides (nylon) are in use in applications such as various electric and electronic components, mechanical components, automotive components and the like as engineering plastic due to their excellent physical properties. Recently, in these applications, the thicknesses and sizes of shaped product have been reduced, and the shapes thereof have become complicated, and, for polyamide resins, there has been a demand for improvement in the balance between mechanical strengths such as impact resistance or rigidity and fluidity during molding.

As a method for improving the impact resistance of polyamides, a method in which an ethylene/α-olefin copolymer into which α,β-unsaturated carboxylic acid is grafted is used as an impact modifier has been proposed (Patent Literature 1). However, it is confirmed that a polyamide composition proposed, if tried to be enhanced in impact resistance, tends to deteriorate in rigidity and fluidity.

As a method for improving the fluidity of polyamides, a method in which a polyvalent alcohol having a melting point of 150°C to 200°C is added (Patent Literature 2) has been proposed. However, for shaped products that are obtained by adding a polyvalent alcohol, there is a concern of the bleed-out of the polyvalent alcohol onto the surface layers of the shaped products.

In addition, Patent Literatures 3 and 4 disclose a polyamide composition excellent in mechanical strength, formability and surface appearance, obtained by using a specified diamine as a diamine component constituting polyamide, but the effect still cannot be said to be sufficient.

For the ethylene/α-olefin copolymer into which α,β-unsaturated carboxylic acid is grafted, which has been proposed, depending on applications, an impact resistance improvement effect is still insufficient, and there is a desire for creation of a superior impact modifier, furthermore, a polyamide composition having excellent impact resistance.

### Citation List

#### Patent Literature

Patent Literature 1: JP2019-35030A
Patent Literature 2: JP2000-345031A
Patent Literature 3: JP2008-095066A
Patent Literature 4: JP2011-148267A

### Summary of Invention

#### Technical Problem

An object of the present invention is to obtain a suitable graft-modified ethylene/α-olefin copolymer as an impact modifier of engineering plastic such as polyamides and to obtain a polyamide composition having further improved impact resistance, particularly, impact resistance at low temperatures.

#### Solution to Problem

The present invention relates to a graft-modified ethylene-based polymer (X) formed by graft modification of an ethylene/α-olefin copolymer (A) satisfying requirements (A-i) to (A-iv) below with a polar compound.

(A-i) A content of a structural unit (a) derived from ethylene is 51 to 99 mol%, and a content of a structural unit (b) derived from an α-olefin having 5 to 20 carbon atoms is within a range of 1 to 49 mol% [provided that the sum of the structural unit (a) and the structural unit (b) is 100 mol%].
(A-ii) A density is within a range of 0.850 to 0.875 g/cm$^3$.
(A-iii) A melt flow rate (MFR) at 190°C and at a load of 2.16 kg is within a range of 0.1 to 25 g/10 min.

(A-iv) A sum of the numbers of a vinyl-type double bond, a vinylidene-type double bond, a disubstituted olefin-type double bond and a trisubstituted olefin-type double bond per 1000 carbon atoms obtained by $^1$H-NMR is 0.16 to 1.00.

Advantageous Effects of Invention

The graft-modified ethylene-based polymer (X) of the present invention is excellent in impact resistance, flexibility and fluidity. In addition, when added to engineering plastic such as polyamides, the graft-modified ethylene-based polymer (X) of the present invention is excellent in an effect of improving the impact resistance, flexibility, fluidity, heat shock resistance and the like of the engineering plastic and thus can be suitably used as a physical property improver of engineering plastic.

Description of Embodiments

<Ethylene/α-olefin copolymer (A)>

An ethylene/α-olefin copolymer (A), which is a raw material of a graft-modified ethylene-based polymer (X) of the present invention, is an ethylene-based copolymer satisfying requirements (A-i) to (A-iv) below.

[Requirement (A-i)]

The ethylene/α-olefin copolymer (A) contains a structural unit (a) derived from ethylene and a structural unit (b) derived from an α-olefin having 5 to 20 carbon atoms and contains 51 to 99 mol% of the structural unit (a) and 1 to 49 mol% of the structural unit (b) per 100 mol% in total of the structural unit (a) and the structural unit (b).
The lower limit value of the content of the structural unit (a) per 100 mol% in total of the structural unit (a) and the structural unit (b) is preferably 60 mol%, more preferably 70 mol%, still more preferably 75 mol% and particularly preferably 80 mol%, and the upper limit value of the content of the structural unit (a) is preferably 97 mol%, more preferably 94 mol%, still more preferably 90 mol% and particularly preferably 86 mol%.
In addition, the lower limit value of the content of the structural unit (b) per 100 mol% in total of the structural unit (a) and the structural unit (b) is preferably 3 mol%, more preferably 6 mol%, still more preferably 10 mol% and particularly preferably 14 mol%, and the upper limit value of the content of the structural unit (b) is preferably 40 mol%, more preferably 30 mol%, still more preferably 25 mol% and particularly preferably 20 mol%.
When the content of the structural unit (a) derived from ethylene satisfies the above-described range, a graft-modified ethylene-based polymer formed by graft modification of the ethylene/α-olefin copolymer (A) with a polar compound is excellent in impact resistance.
Specific examples of the α-olefin having 5 to 20 carbon atoms constituting the ethylene/α-olefin copolymer (A) according to the present invention include linear α-olefins having 5 to 20 carbon atoms such as 1-pentene, 1-hexene, 1-octene, 1-decene, 1-undecene, 1-dodecene, 1-tetradecene, 1-hexadecene, 1-octadecene, and 1-eicosene; and branched α-olefins having 5 to 20 carbon atoms (preferably having 6 to 15 carbon atoms) such as 3-methyl-1-butene, 3-methyl-1-pentene, 4-methyl-1-pentene, 3-ethyl-1-pentene, 4,4-dimethyl-1-pentene, 4-methyl-1-hexene, 4,4-dimethyl-1-hexene, 4-ethyl-1-hexene, and 3-ethyl-1-hexene. Among these α-olefins, α-olefins having 6 to 15 carbon atoms are preferable, α-olefins having 6 to 12 carbon atoms are more preferable, 1-hexene, 1-octene and 1-decene are still more preferable, and 1-octene is particularly preferable.
The number of these α-olefins having 5 to 20 carbon atoms may be one or more.

[Requirement (A-ii)]

The density is within a range of 0.850 to 0.875 g/cm$^3$. The lower limit value of the density is preferably 0.853 g/cm$^3$, more preferably 0.855 g/cm$^3$ and still more preferably 0.858 g/cm$^3$. The upper limit value of the density is preferably 0.874 g/cm$^3$, more preferably 0.872 g/cm$^3$ and still more preferably 0.870 g/cm$^3$.
When the density satisfies the above-described range, a graft-modified ethylene-based polymer (X) formed by graft modification of the ethylene/α-olefin copolymer (A) with a polar compound is excellent in impact resistance.

[Requirement (A-iii)]

The melt flow rate (MFR) at 190°C and at a load of 2.16 kg is within a range of 0.1 to 25 g/10 min. The lower limit value of the range of the metal flow rate is preferably 0.8 g/10 min, more preferably 0.9 g/10 min, still more preferably 1.0 g/10 min and particularly preferably 1.1 g/10 min. The upper limit value of the range of the metal flow rate is preferably 22 g/10 min, more preferably 20 g/10 min, still more preferably 19 g/10 min and particularly preferably 18 g/10 min.

When the MFR satisfies the above-described range, a graft-modified ethylene-based polymer (X) formed by graft modification of the ethylene/α-olefin copolymer (A) with a polar compound is excellent in impact resistance.

[Requirement (A-iv)]

The sum of the numbers of a vinyl-type double bond, a vinylidene-type double bond, a disubstituted olefin-type double bond and a trisubstituted olefin-type double bond, which will be described below, per 1000 carbon atoms (1000 C) obtained by $^{1}$H-NMR [hereinafter, referred to as total double bond amount in some cases] is within a range of 0.16 to 1.00 double bonds/1000 C. The lower limit value of the total double bond amount is preferably 0.18 double bonds/1000 C, more preferably 0.19 double bonds/1000 C, still more preferably 0.20 double bonds/1000 C and particularly preferably 0.22 double bonds/1000 C. The upper limit value of the total double bond amount is preferably 0.95 double bonds/1000 C, more preferably 0.90 double bonds/1000 C, still more preferably 0.85 double bonds/1000 C and particularly preferably 0.80 double bonds/1000 C.

[Formula 1]

<Vinyl>

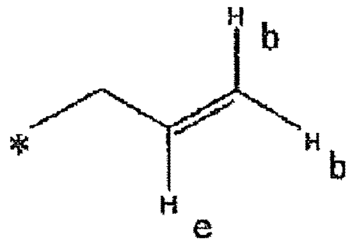

<Vinylidene>

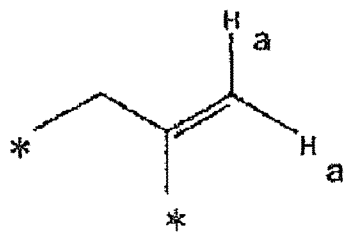

<Disubstituted olefin-type double bond>

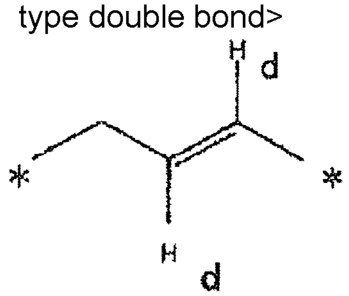

<Trisubstituted olefin-type double bond>

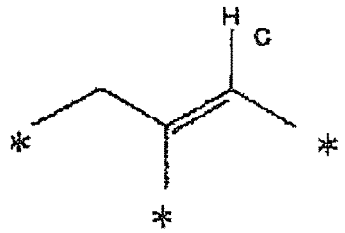

In each formula, * represents a site of bonding with an atom other than a hydrogen atom.

<Double bond amount (unsaturated bond amount)>

The double bond amount was quantified by the $^{1}$H-NMR measurement (manufactured by JEOL Ltd., "ECX400P-type nuclear magnetic resonance device") of the ethylene/α-olefin copolymer (A). Here, as signals derived from double bonds, a vinyl-type double bond (vinyl group), a vinylidene-type double bond (vinylidene group), a disubstituted olefin-type double bond and a trisubstituted olefin-type double bond are observed. The double bond amount was quantified from the integral intensity of each signal. The signal of methylene, which is a main chain of the ethylene/α-olefin copolymer (A), was used as a chemical shift criterion (1.2 ppm). The total amount of the vinyl group and the vinylidene group was obtained as a molecular end double bond amount, the total amount of the disubstituted olefin-type double bond and the trisubstituted olefin-type double bond was obtained as an inner unsaturated bond amount, and the total amount of the double bonds (total double bond amount) was obtained as the sum of the individual double bonds. Analysis where 0.1 double bonds/1000 C was set as the limit of quantification was performed, and, even in a case where the total double bond amount was less than 0.1 double bonds/1000 C, if a signal was confirmed, the double bond amount was calculated by extrapolating a calibration curve.

The peaks of individual hydrogen atoms a to e are observed near the followings.

- Peak of hydrogen atom a: 4.60 ppm

- Peak of hydrogen atom b: 4.85 ppm
- Peak of hydrogen atom c: 5.10 ppm
- Peak of hydrogen atom d: 5.25 ppm
- Peak of hydrogen atom e: 5.70 ppm

The quantitative formula of the double bond amount is as described below.

· Vinyl-type double bond amount = {(integral intensity of signal b) + (integral intensity of signal e)}/3

· Vinylidene-type double bond amount = (integral intensity of signal a)/2

· Disubstituted olefin-type double bond amount = (integral intensity of signal d)/2

· Trisubstituted olefin-type double bond amount = (integral intensity of signal c)

While the molecular weight of a graft-modified ethylene-based polymer that is obtained by graft modification of an ethylene/$\alpha$-olefin copolymer in which the total double bonds included in the ethylene/$\alpha$-olefin copolymer is less than 0.16 double bonds/1000 C with a polar compound significantly decreases, when the total double bond amount that is included in the ethylene/$\alpha$-olefin copolymer is within the range of the present invention, that is, 0.16 to 1.00 double bond/1000 C, a decrease in the molecular weight of the graft-modified ethylene-based polymer is inhibited, which is effective for improvement in impact resistance. In contrast, when the total double bond amount exceeds the above-described range, the molecular weight of the graft-modified ethylene-based polymer becomes high, and, in a case where the polymer is blended into a polyamide, there is a concern that the fluidity of a resulting composition may deteriorate.

<Graft-modified ethylene-based polymer (X)>

One mode of the graft-modified ethylene-based polymer (X) of the present invention is a graft-modified ethylene-based polymer formed by graft modification of the ethylene/$\alpha$-olefin copolymer (A) with a polar compound and preferably satisfies requirements (X-i) and (X-ii) below.

[Requirement (X-i)]

$MFR_{10}/MFR_{2.16}$ is 10 or more, preferably 10 to 20, more preferably 10 to 15 and still more preferably 10 to 12.5 (wherein $MFR_{10}$ is the melt flow rate measured at 190°C and at a load of 10 kg by the method of ASTM D1238, and $MFR_{2.16}$ is the melt flow rate measured at 190°C and at a load of 2.16 kg by the method of ASTM D1238). $MFR_{10}/MFR_{2.16}$ is a value that is considered to be one of the indexes for the degree of long chain branches in the polymer, and a small $MFR_{10}/MFR_{2.16}$ indicates that the number of long chain branches is small. When $MFR_{10}/MFR_{2.16}$ is 10 or more, the impact resistance and the fluidity are excellent.

While the reason therefor is not clear, it is considered that, when a graft-modified ethylene-based polymer having an $MFR_{10}/MFR_{2.16}$ of less than 10 is kneaded with a polyamide, the viscosity under high shear stress becomes high, and the dispersibility of the polymer in the polyamide deteriorates, whereby the impact resistance deteriorates.

On the other hand, for a polymer having an $MFR_{10}/MFR_{2.16}$ of more than 20, there is a concern that the mechanical strength thereof may decrease and the impact resistance may deteriorate.

[Requirement (X-ii)]

The graft amount of the polar compound is 0.1 to 5 mass%. Here, the lower limit value of the graft amount of the polar compound is preferably 0.3 mass%, more preferably 0.55 mass%, still more preferably 0.6 mass% and particularly preferably 0.8 mass%. Meanwhile, the upper limit value of the graft amount of the polar compound is preferably 4 mass%, more preferably 3 mass%, still more preferably 2 mass% and particularly preferably 1.7 mass%.
For a graft-modified ethylene-based polymer in which the graft amount of the polar compound is less than the lower limit value, there is a concern that the compatibility with polyamides may deteriorate and the impact resistance of a resulting composition may deteriorate, and, on the other hand, for a graft-modified ethylene-based polymer in which the graft amount exceeds the upper limit value, there is a concern that the interaction with polyamides may become too strong and the fluidity of a resulting composition may deteriorate.
The polar compound that graft-modifies the ethylene/α-olefin copolymer (A) according to the present invention is at least one polar compound selected from a hydroxyl group-containing ethylenically unsaturated compound, an amino group-containing ethylenically unsaturated compound, an epoxy group-containing ethylenically unsaturated compound, an aromatic vinyl compound, an unsaturated carboxylic acid and a derivative thereof, a vinyl ester compound, and vinyl chloride.
Among these polar compounds, an unsaturated carboxylic acid and a derivative thereof are preferable, and examples of these unsaturated carboxylic acid and derivative thereof include unsaturated carboxylic acids having 3 to 10 carbon atoms, preferably 3 to 8 carbon atoms, and derivatives of the unsaturated carboxylic acids. Examples of the derivatives of the unsaturated carboxylic acids include acid anhydrides, esters, amides and imides of the unsaturated carboxylic acids.
In addition, examples of the unsaturated carboxylic acids include monobasic acids such as acrylic acid and methacrylic acid; dibasic acids such as maleic acid, fumaric acid, itaconic acid, citraconic acid and 5-norbornene-2,3-dicarboxylic acid.
Examples of the acid anhydrides of the unsaturated carboxylic acids include acid anhydrides of dibasic acids such as maleic acid, itaconic acid, citraconic acid and 5-norbornene-2,3-dicarboxylic acid.
Examples of the esters of the unsaturated carboxylic acids include esters and half esters, such as methyl acrylate, methyl methacrylate, ethyl acrylate, ethyl methacrylate, glycidyl acrylate, maleic acid monoethyl ester, maleic acid diethyl ester, fumaric acid monomethyl ester, fumaric acid dimethyl ester, itaconic acid monomethyl ester and itaconic acid diethyl ester.
Examples of the amides of the unsaturated carboxylic acids include acrylamide, methacrylamide, maleic acid monoamide, maleic acid diamide, maleic acid-N-monoethylamide, maleic acid-N,N-diethylamide, maleic acid-N-monobutylamide, maleic acid-N,N-dibutylamide, fumaric acid monoamide, fumaric acid diamide, fumaric acid-N-monobutylamide and fumaric acid-N,N-dibutylamide.
Examples of the imides of the unsaturated carboxylic acids include maleimide, N-butylmaleimide and N-phenylmaleimide.
As one mode of the graft-modified ethylene-based polymer (X) of the present invention, a maleic anhydride graft-modified ethylene/1-octene copolymer satisfying the requirements (X-i) and requirements (X-iii) to (X-vi) is preferable.

[Requirement (X-iii)]

The graft amount of a maleic anhydride is within a range of 0.1 to 3 mass%. Here, the lower limit value of the graft amount of the maleic anhydride is preferably 0.4 mass%, more preferably 0.55 mass% and still more preferably 0.6 mass%. Meanwhile, the upper limit value of the graft amount of the maleic anhydride is preferably 4 mass%, more preferably 3 mass% and still more preferably 2 mass%.

[Requirement (X-iv)]

The graft-modified ethylene-based polymer (X) contains a structural unit (a) derived from ethylene and a structural unit (b) derived from an α-olefin having 5 to 20 carbon atoms, and contains 51 to 99 mol% of the structural unit (a) and 1 to 49 mol% of the structural unit (b) per 100 mol% in total of the structural unit (a) and the structural unit (b).
The lower limit value of the content of the structural unit (a) per 100 mol% in total of the structural unit (a) and the structural unit (b) is preferably 60 mol%, more preferably 70 mol%, still more preferably 75 mol% and particularly preferably 80 mol%, and the upper limit value of the content of the structural unit (a) is preferably 97 mol%, more preferably 94 mol%, still more preferably 90 mol% and particularly preferably 86 mol%.
In addition, the lower limit value of the content of the structural unit (b) per 100 mol% in total of the structural unit (a) and the structural unit (b) is preferably 3 mol%, more preferably 6 mol%, still more preferably 10 mol% and

particularly preferably 14 mol%, and the upper limit value of the content of the structural unit (b) is preferably 40 mol%, more preferably 30 mol%, still more preferably 25 mol% and particularly preferably 20 mol%.

[Requirement (X-v)]

The density is within a range of 0.850 to 0.880 g/cm$^3$. The lower limit value of the density is preferably 0.853 g/cm$^3$, more preferably 0.855 g/cm$^3$ and still more preferably 0.858 g/cm$^3$. The upper limit value of the density is preferably 0.877 g/cm$^3$, more preferably 0.865 g/cm$^3$ and still more preferably 0.874 g/cm$^3$.

[Requirement (X-vi)]

The melt flow rate (MFR) at 190°C and at a load of 2.16 kg is within a range of 0.1 to 25 g/10 min. The lower limit value of the range of the metal flow rate is preferably 0.2 g/10 min, more preferably 0.3 g/10 min, still more preferably 0.35 g/10 min and particularly preferably 0.4 g/10 min. The upper limit value of the range of the metal flow rate is preferably 22 g/10 min, more preferably 20 g/10 min, still more preferably 15 g/10 min and particularly preferably 10 g/10 min.

<Method for producing graft-modified ethylene-based polymer (X)>

The graft-modified ethylene-based polymer of the present invention can be produced by grafting a polar compound into the ethylene/α-olefin copolymer (A) by various known methods.

Specifically, it is possible to adopt, for example, a method in which the ethylene/α-olefin copolymer (A) is dissolved in an organic solvent, next, a polar compound such as an unsaturated carboxylic acid or a derivative thereof and, as necessary, a radical initiator such as an organic peroxide are added to an obtained solution, and a reaction is caused at a temperature of usually 60°C to 350°C, preferably 80°C to 190°C, for 0.5 to 15 hours, preferably 1 to 10 hours or a method in which the ethylene/α-olefin copolymer (A), an unsaturated carboxylic acid or a derivative thereof and, as necessary, a radical initiator such as an organic peroxide are added in the absence of a solvent using an extruder or the like and a reaction is caused at the melting point of the ethylene/α-olefin copolymer (A) or higher, preferably 160°C to 350°C, for 0.5 to 10 hours.

Regarding the graft modification amount of the ethylene/α-olefin copolymer (A), the amount of a structural unit derived from the polar compound such as an unsaturated carboxylic acid or a derivative thereof (graft modification amount) was quantified using a previously-created calibration curve after the intensity of a peak derived from the structural unit (in the case of the maleic anhydride, 1790 cm$^{-1}$) was measured using an infrared absorption analyzer.

Into the graft-modified ethylene-based polymer (X) of the present invention, as necessary, other additives, for example, additives such as a heat-resistant stabilizer, a weathering stabilizer, a light-resistant stabilizer, an anti-aging agent, an antioxidant, a fatty acid metal salt, a softener, a dispersant, a colorant, a pigment, an ultraviolet absorber, and a nucleating agent may be blended as long as the object of the present invention is not impaired.

<Applications>

The graft-modified ethylene-based polymer (X) of the present invention itself is excellent in impact resistance, flexibility and fluidity and, when added to engineering plastic such as polyamides, is also excellent in an effect of improving the impact resistance, flexibility, fluidity, heat shock resistance and the like of the engineering plastic and thus can be suitably used as a physical property improver of engineering plastic.

<Polyamide (P)>

The polyamide (P) according to the present invention is not particularly limited, and a variety of conventionally known polyamides such as aliphatic polyamides, semi-aromatic polyamides and aromatic polyamides (also referred to as nylon) can be used without limitation as long as the effects of the present invention are not impaired. For example, lactam, or a melt-moldable polyamide obtained by a polycondensation reaction of diamine and dicarboxylic acid can be used. Specific examples of the polyamide (P) include the following polymers.

(1) Polycondensates of organic dicarboxylic acids having 4 to 12 carbon atoms and organic diamines having 2 to 13 carbon atoms, for example, polyhexamethylene adipamide [6,6 nylon] that is a polycondensate of hexamethylenediamine and adipic acid, polyhexamethylene azelamide [6,9 nylon] that is a polycondensate of hexamethylenediamine and azelaic acid, polyhexamethylene sebacamide [6,10 nylon] that is a polycondensate of hexamethylenediamine and sebacic acid, polyhexamethylene dodecanoamide [6,12 nylon] that is a polycondensate of hexamethylenediamine and dodecanedioic acid, semi-aromatic polyamides (PA6T, PA9T, PA10T, and PA11T) that are

polycondensates of aromatic dicarboxylic acids and aliphatic diamines, and polybis(4-aminocyclohexyl)methanedodecane that is a polycondensate of bis-p-aminocyclohexylmethane and dodecanedioic acid.

Examples of the organic dicarboxylic acids include adipic acid, pimelic acid, suberic acid, phthalic acid, terephthalic acid, isophthalic acid, naphthalenedicarboxylic acid, phenylenedioxydiacetic acid, oxydibenzoic acid, diphenylmethanedicarboxylic acid, diphenylsulfonedicarboxylic acid, biphenyldicarboxylic acid, sebacic acid and dodecanedioic acid. Examples of the organic diamines include hexamethylenediamine, octamethylenediamine, nonanediamine, octanediamine, decanediamine, undecanediamine and dodecanediamine.

(2) Polycondensates of ω-amino acids, for example, polyundecaneamide [11 nylon] that is a polycondensate of ω-aminoundecanoic acid.
(3) Ring-opening polymerized products of lactams, for example, polycapramide [6 nylon] that is a ring-opening polymerized product of ε-caprolactam, and polylaurinlactam [12 nylon] that is a ring-opening polymerized product of ω-laurolactam.

Among the polyamides (P) exemplified above, the aliphatic polyamides are preferable, polyhexamethylene adipamide [6,6 nylon], polyhexamethylene azelamide [6,9 nylon], polycapramide [6 nylon] and polylaurinlactam [12 nylon] are more preferable, and polyhexamethylene adipamide [6,6 nylon] and polycapramide [6 nylon] are still more preferable.

The melting point of the polyamide (P) is preferably 150°C to 330°C and more preferably 150 to 270°C. The melting point is preferably equal to or lower than the upper limit value in that the graft-modified ethylene-based copolymer is inhibited from being decomposed or volatilized when formed. The melting point is preferably equal to or higher than the lower limit value in terms of impact strength of the resulting polyamide composition.

The polyamide (P) for use in the present invention can be, for example, a polyamide produced from adipic acid, isophthalic acid and hexamethylenediamine, or a blended product obtained by compounding two or more polyamides, like a mixture of 6 nylon and 6,6 nylon.

<Polyamide composition>

A polyamide composition of the present invention contains 50 to 99 mass% of the polyamide (P) and 1 to 50 mass% of the graft-modified ethylene-based polymer (X) [provided that the sum of the polyamide (P) and the graft-modified ethylene-based polymer (X) is 100 mass%].

From the viewpoint of more suitably exhibiting the effects of the present invention, the lower limit of the content of the polyamide (P) is preferably 60 mass% or more, more preferably 70 mass% or more and still more preferably 80 mass% or more, and the upper limit is preferably 95 mass% or less, more preferably 93 mass% or less and still more preferably 90 mass% or less.

Meanwhile, the lower limit of the content of the graft-modified ethylene-based polymer (X) is preferably 5 mass% or more, more preferably 7 mass% or more and still more preferably 10 mass% or more, and the upper limit is preferably 40 mass% or less, more preferably 30 mass% or less and still more preferably 20 mass% or less.

When containing the graft-modified ethylene-based polymer (X) within the above-described range, the polyamide composition of the present invention makes it possible to obtain shaped products having excellent impact resistance, particularly, impact resistance at low temperatures, and fluidity.

The polyamide composition of the present invention may contain, in addition to the polyamide (P) and the graft-modified ethylene-based polymer (X), as necessary, usually 0.01 to 10 parts by mass, preferably 0.1 to 5 parts by mass, of any additive(s) such as other synthetic resin, other rubber, an antioxidant, a heat stabilizer, a weather stabilizer, a slipping agent, an antiblocking agent, a nucleating agent, a pigment, a hydrochloric acid absorbent and/or a copper inhibitor, per 100 parts by mass of the polyamide composition as long as the object of the present invention is not impaired.

[Filler]

In addition, the polyamide composition of the present invention may be a filler-containing polyamide composition further containing usually 1 to 100 parts by mass, preferably 5 to 80 parts by mass and more preferably 10 to 70 parts by mass of a filler per 100 parts by mass of the polyamide composition. Such a filler-containing polyamide composition is useful in a case where a more enhancement in mechanical strength of a shaped product is desired or in an application where a shaped product having an adjusted linear expansion coefficient (rate of mold shrinkage) is needed.

Examples of the filler include filling agents such as a fibrous filling agent, a granular filling agent and a plate-like filling agent. Specific examples of the fibrous filling agent include glass fiber, carbon fiber and aramid fiber, and suitable examples of the glass fiber include a chopped strand having an average fiber diameter of 6 to 14 um. Specific

examples of such a granular or plate-like filling agent include pulverized products of calcium carbonate, mica, a glass flake, glass balloon, magnesium carbonate, silica, talc, clay, carbon fiber, and aramid fiber. Such a filler is not included in the additive.

<Method for producing polyamide composition>

The polyamide composition of the present invention is prepared by, for example, melting and kneading the polyamide (P), the graft-modified ethylene-based polymer (X), and an additive to be blended as necessary by any of various conventionally known methods. Specifically, the composition is obtained by simultaneously or sequentially charging the respective components into, for example, a Henschel mixer, a V-type blender, a tumbler mixer or a ribbon blender, mixing the components, and then melt kneading the mixture with, for example, a monoaxial extruder, a multiaxial extruder, a kneader or a Banbury mixer. In particular, use of an apparatus excellent in kneading performance, such as a multiaxial extruder, a kneader or a Banbury mixer, provides a high-quality polyamide composition in which the respective components are more uniformly dispersed. Any other additive such as an antioxidant can also be, if necessary, added at any stage.

[Shaped product]

The polyamide composition and the filler-containing polyamide composition of the present invention can be formed into various shaped products by a known forming method such as injection molding, extrusion, inflation molding, blow molding, extrusion blow molding, injection blow molding, press molding, vacuum forming, calendering or foam molding, and can be applied to known various applications.

Examples

Hereinafter, the present invention will be described further specifically based on Examples. However, the present invention is not limited to these Examples.
Each polymer and the like used in Examples and Comparative Examples will be described below.

[Ethylene/1-octene copolymer (A)]

As an ethylene/1-octene copolymer (A), ethylene/1-octene copolymers produced in Production Examples below were used.

[Production Example 1]

<Production of ethylene/1-octene copolymer (A-1)>

A hexane solution of trisobutylaluminum, as a cocatalyst, and a hexane solution of [bis(4-methoxyphenyl)methylene(η5-cyclopentadienyl)(η5-tetramethyloctahydrodibenzofluorenyl)]hafnium dichloride and a hexane slurry solution of triphenylcarbenium tetrakis(pentafluorophenyl)borate, as main catalysts, were supplied to one supply port of a continuous polymerizer having an internal capacity of 50 L and including a stirring blade at proportions of 20 mmol/hr, 0.0075 mmol/hr and 0.034 mmol/hr, respectively, and dehydrated and purified normal hexane, which was used as a polymerization solvent, was continuously supplied so that the sum of the catalyst solution and the dehydrated and purified normal hexane reached 37.3 L/hr.
At the same time, ethylene, 1-octene and hydrogen were continuously supplied to another supply port of the polymerizer at proportions of 6.4 kg/hr, 7.2 kg/hr and 110 NL/hr, respectively, and continuous solution polymerization was performed under conditions of a polymerization temperature of 130°C, a total pressure of 2.5 MPaG and a residence time of 0.5 hours. A normal hexane/toluene mixed solution of an ethylene/1-octene copolymer generated in the polymerizer was continuously discharged through a discharge port provided in the bottom portion of the polymerizer and guided to a connecting pipe having a jacket portion heated with 3 kg/cm$^2$ of steam so that the normal hexane/toluene mixed solution of the ethylene/1-octene copolymer reached 150°C. A supply port through which methanol, which was a catalyst deactivator, was injected was provided immediately before the connecting pipe, and methanol was injected at a rate of approximately 11 L/hr and merged into the normal hexane/toluene mixed solution of the ethylene/1-octene copolymer. The normal hexane/toluene mixed solution of the ethylene/1-octene copolymer held at approximately 200°C in the steam jacket-attached connecting pipe was continuously sent to a flash tank by adjusting the degree of opening of a pressure control valve provided at the connecting pipe terminal portion so as to maintain approximately 2.5 MPaG. Upon the transfer into the flash tank, the solution temperature and the degree of opening of a pressure regulating valve were set

so that the pressure in the flash tank maintained approximately 0.05 MPaG and the temperature of a steam portion in the flash tank maintained approximately 200°C. After that, strands were cooled in a water tank through a monoaxial extruder having a dice temperature set to 190°C, the strands were cut with a pellet cutter, and the ethylene/1-octene copolymer was obtained as pellets. The yield was 7.3 kg/2 hr.

Various physical properties of the ethylene/1-octene copolymer (A-1) obtained above were measured by methods to be described below. The measurement results were shown in Table 1.

[Production Example 2]

<Production of ethylene/1-octene copolymer (A-2)>

The supply amount, polymerization temperature and polymerization pressure of 1-octene in Production Example 1 were adjusted, thereby producing an 1-octene copolymer (A-2). Various physical properties of the obtained ethylene/1-octene copolymer (A-2) were measured by methods to be described below. The measurement results were shown in Table 1.

[Ethylene/1-octene copolymer (C)]

In Comparative Examples, ethylene/1-octene copolymers (C) below were used.

(1) As an ethylene/1-octene copolymer (C-1), trade name ENGAGE 8842 manufactured by The Dow Chemical Company was used.
(2) As an ethylene/1-octene copolymer (C-2), trade name ENGAGE 8137 manufactured by The Dow Chemical Company was used.
(3) As an ethylene/1-octene copolymer (C-3), trade name ENGAGE 8200 manufactured by The Dow Chemical Company was used.
(4) As an ethylene/1-octene copolymer (C-4), trade name ENGAGE 8100 manufactured by The Dow Chemical Company was used.

[Example 1]

<Production of graft-modified ethylene/1-octene copolymer (X-1)>

100 Parts by mass of the ethylene/1-octene copolymer (A-1), 1.2 parts by mass of a maleic anhydride and 0.06 parts by mass of PERHEXA 25B (2,5-dimethyl-2,5-di(t-butylperoxy)hexane, manufactured by NOF Corporation, decomposition temperature at which the half-life became one minute: 179.8°C) were injected into an extruder TEX30 (manufactured by The Japan Steel Works, Ltd.), and the extruder was operated under the following conditions, thereby obtaining a graft-modified ethylene/1-octene copolymer (X-1). The density, maleic anhydride graft amount (modification amount) and MFR of the obtained polymer were measured, and the results are shown in Table 1.

Operation conditions of extruder

Cylinder temperatures C2/C3/C4/C5/C6 = 50°C/170°C/200°C/200°C/200°C

Screw rotation speed 240 rpm
Feeder rotation speed 65 rpm

[Example 2]

<Production of graft-modified ethylene/1-octene copolymer (X-2)>

A graft-modified ethylene/1-octene copolymer (X-2) was obtained in the same manner as in Example 1 except that the ethylene/1-octene copolymer (A-2) obtained in Production Example 2 was used instead of the ethylene/1-octene copolymer (A-1) used in Example 1. The density, maleic anhydride graft amount (modification amount) and MFR of the

obtained polymer were measured, and the results are shown in Table 1.

[Example 3]

<Production of graft-modified ethylene/1-octene copolymer (X-3)>

A graft-modified ethylene/1-octene copolymer (X-3) was obtained in the same manner as in Example 1 except that an ethylene/1-octene copolymer (A-3) [manufactured by Mitsui Chemicals, Inc., product name TAFMER H-5030S] was used instead of the ethylene/1-octene copolymer (A-1) used in Example 1. The density, maleic anhydride graft amount (modification amount) and MFR of the obtained polymer were measured, and the results are shown in Table 1.

[Example 4]

<Production of graft-modified ethylene/1-octene copolymer (X-4)>

A graft-modified ethylene/1-octene copolymer (X-4) was obtained in the same manner as in Example 1 except that an ethylene/1-octene copolymer (A-4) [manufactured by Mitsui Chemicals, Inc., product name TAFMER H-1030S] was used instead of the ethylene/1-octene copolymer (A-1) used in Example 1. The density, maleic anhydride graft amount (modification amount) and MFR of the obtained polymer were measured, and the results are shown in Table 1.

[Comparative Example 1]

<Production of graft-modified ethylene/1-octene copolymer (Y-1)>

A graft-modified ethylene/1-octene copolymer (Y-1) was obtained in the same manner as in Example 1 except that the ethylene/1-octene copolymer (C-1) was used instead of the ethylene/1-octene copolymer (A-1) used in Example 1. The density, maleic anhydride graft amount (modification amount) and MFR of the obtained polymer were measured, and the results are shown in Table 1.

[Comparative Example 2]

<Production of graft-modified ethylene/1-octene copolymer (Y-2)>

A graft-modified ethylene/1-octene copolymer (Y-2) was obtained in the same manner as in Example 1 except that the ethylene/1-octene copolymer (C-2) was used instead of the ethylene/1-octene copolymer (A-1) used in Example 1. The density, maleic anhydride graft amount (modification amount) and MFR of the obtained polymer were measured, and the results are shown in Table 1.

[Comparative Example 3]

<Production of graft-modified ethylene/1-octene copolymer (Y-3)>

A graft-modified ethylene/1-octene copolymer (Y-3) was obtained in the same manner as in Example 1 except that the ethylene/1-octene copolymer (C-3) was used instead of the ethylene/1-octene copolymer (A-1) used in Example 1. The density, maleic anhydride graft amount (modification amount) and MFR of the obtained polymer were measured, and the results are shown in Table 1.

[Comparative Example 4]

<Production of graft-modified ethylene/1-octene copolymer (Y-4)>

A graft-modified ethylene/1-octene copolymer (Y-4) was obtained in the same manner as in Example 1 except that the ethylene/1-octene copolymer (C-4) was used instead of the ethylene/1-octene copolymer (A-1) used in Example 1. The density, maleic anhydride graft amount (modification amount) and MFR of the obtained polymer were measured, and the results are shown in Table 1.

Physical properties of the respective polymers and the like obtained in Examples and Comparative Examples were measured by the following methods.

[Density]

The density (g/$cm^3$) was obtained at 23°C according to ASTM D1505.

[Melt flow rate (MFR)]

The melt flow rates (MFR) were measured according to ASTM D1238 under conditions of 190°C and a load of 2.16 kg and 190°C and a load of 10 kg.

[Maleic anhydride graft amount]

The maleic anhydride graft amount was measured by the above-described method.

[Double bond amount (unsaturated bond amount)]

The fixed amount of the double bond amount was measured by the above-described method.

[Table 1]

Table 1

| | | | Example 1 | Example 2 | Example 3 | Example 4 | Comparative Example 1 | Comparative Example 2 | Comparative Example 3 | Comparative Example 4 |
|---|---|---|---|---|---|---|---|---|---|---|
| Ethylene/ 1-octene copolymer | Polymer | | A-1 | A-2 | A-3 | A-4 | C-1 | C-2 | C-3 | C-4 |
| | Density | $g/cm^3$ | 0.860 | 0.861 | 0.870 | 0.870 | 0.860 | 0.867 | 0.870 | 0.870 |
| | MFR(190°C. 2.16kgf) | g/10 min | 5.0 | 1.1 | 5.0 | 1.0 | 0.9 | 12.6 | 5.0 | 1.0 |
| | Double bond amount | Double bonds/ 1000 C | 0.19 | 0.19 | 0.54 | 0.24 | 0.11 | 0.13 | 0.15 | 0.09 |
| Graft-modified ethylene/ 1-octene copolymer | Polymer | | X-1 | X-2 | X-3 | X-4 | Y-1 | Y-2 | Y-3 | Y-4 |
| | Density | $g/cm^3$ | 0.864 | 0.863 | 0.873 | 0.872 | 0.864 | 0.870 | 0.875 | 0.875 |
| | MFR(190°C. 2.16kgf) | g/10 min | 3.2 | 0.78 | 1.5 | 0.4 | 0.69 | 9.8 | 2.2 | 0.4 |
| | $MFR_{10}/MFR_{2.16}$ | | 10 | 12 | 10 | 11 | 13 | 9 | 11 | 14 |
| | Graft amount | mass% | 1.1 | 1.1 | 1.2 | 1.1 | 0.72 | 0.62 | 0.9 | 0.9 |

[Example 5]

90 Parts by mass of 6,6 Nylon (manufactured by Toray Industries, Inc., AMILAN CM3007: melting point = 265°C), as a polyamide (P-1), and 10 parts by mass of the graft-modified ethylene/1-octene copolymer (X-1) obtained in Example 1 were mixed together using a Henschel mixer, thereby preparing a dry blended product. Next, the dry blended product was supplied to a biaxial extruder set at 290°C, and thus a polyamide composition pellet was prepared. The polyamide composition pellet was dried at 80°C all night and all day, and thereafter subjected to injection molding in the following conditions, and thus a test piece for testing physical properties was produced. Table 2 shows the results.

(Injection molding conditions)

Cylinder temperature: 280°C
Injection pressure: 40 MPa
Mold temperature: 80°C

Physical properties were evaluated using the obtained test piece for testing physical properties and a polyamide composition.

[Charpy impact test]

A notched Charpy impact strength was measured according to JIS K 7111 under the following conditions.

<<Test conditions>>

Temperatures: 23°C and -40°C
Test piece: 10 mm (width) × 80 mm (length) × 4 mm (thickness)

[Fluidity (spiral flow)]

The distance of flow was measured by injection molding into a mold having a 3.8 mmφ semicircular spiral groove with an injection molding machine having a mold clamping force of 50 t, at a cylinder temperature of 280°C, an injection pressure of 100 MPa and a mold temperature of 80°C.

[Example 6]

A polyamide composition pellet was prepared in the same manner as in Example 5 except that the graft-modified ethylene/1-octene copolymer (X-1) was changed to the graft-modified ethylene/1-octene copolymer (X-2), and a test piece for testing physical properties was produced. Table 2 shows the results.

[Example 7]

A polyamide composition pellet was prepared in the same manner as in Example 5 except that the graft-modified ethylene/1-octene copolymer (X-1) was changed to the graft-modified ethylene/1-octene copolymer (X-3), and a test piece for testing physical properties was produced. Table 2 shows the results.

[Example 8]

A polyamide composition pellet was prepared in the same manner as in Example 5 except that the graft-modified ethylene/1-octene copolymer (X-1) was changed to the graft-modified ethylene/1-octene copolymer (X-4), and a test piece for testing physical properties was produced. Table 2 shows the results.

[Example 9]

A dry blended product of a polyamide composition was prepared in the same manner as in Example 5 except

that, as a polyamide (P-2), 6 nylon (manufactured by Toray Industries, Inc., AMILAN CM1007: melting point = 225°C) was used. Next, the dry blended product was supplied to a biaxial extruder set at 245°C, and thus a polyamide composition pellet was prepared. The polyamide composition pellet was dried at 80°C all night and all day, and thereafter subjected to injection molding in the following conditions, and thus a test piece for testing physical properties was produced. Table 2 shows the results.

(Injection molding conditions)

Cylinder temperature: 245°C
Injection pressure: 40 MPa
Mold temperature: 80°C

[Fluidity (spiral flow)]

The distance of flow was measured by injection molding into a mold having a 3.8 mmφ semicircular spiral groove with an injection molding machine having a mold clamping force of 50 t, at a cylinder temperature of 245°C, an injection pressure of 100 MPa and a mold temperature of 80°C.

[Comparative Example 5]

A polyamide composition pellet was prepared in the same manner as in Example 5 except that the graft-modified ethylene/1-octene copolymer (X-1) was changed to the graft-modified ethylene/1-octene copolymer (Y-1), and a test piece for testing physical properties was produced. Table 2 shows the results.

[Comparative Example 6]

A polyamide composition pellet was prepared in the same manner as in Example 5 except that the graft-modified ethylene/1-octene copolymer (X-1) was changed to the graft-modified ethylene/1-octene copolymer (Y-2), and a test piece for testing physical properties was produced. Table 2 shows the results.

[Comparative Example 7]

A polyamide composition pellet was prepared in the same manner as in Example 5 except that the graft-modified ethylene/1-octene copolymer (X-1) was changed to the graft-modified ethylene/1-octene copolymer (Y-3), and a test piece for testing physical properties was produced. Table 2 shows the results.

[Comparative Example 8]

A polyamide composition pellet was prepared in the same manner as in Example 5 except that the graft-modified ethylene/1-octene copolymer (X-1) was changed to the graft-modified ethylene/1-octene copolymer (Y-4), and a test piece for testing physical properties was produced. Table 2 shows the results.

[Comparative Example 9]

A polyamide composition pellet was prepared in the same manner as in Example 9 except that the graft-modified ethylene/1-octene copolymer (X-1) was changed to the graft-modified ethylene/1-octene copolymer (Y-1), and a test piece for testing physical properties was produced. Table 2 shows the results.

[Comparative Example 10]

A polyamide composition pellet was prepared in the same manner as in Example 5 except that the graft-modified ethylene/1-octene copolymer (X-1) was not used, and a test piece for testing physical properties was produced. Table 2 shows the results.

[Comparative Example 11]

A polyamide composition pellet was prepared in the same manner as in Example 9 except that the graft-modified ethylene/1-octene copolymer (X-1) was not used, and a test piece for testing physical properties was produced. Table 2 shows the results.

[Table 2]

Table 2

| | | Example 5 | Example 6 | Example 7 | Example 8 | Comparative Example 5 | Comparative Example 6 | Comparative Example 7 | Comparative Example 8 | Example 9 | Comparative Example 9 | Comparative Example 10 | Comparative Example 11 |
|---|---|---|---|---|---|---|---|---|---|---|---|---|---|
| Composition (mass%) | Polyamide (P-1) | 90 | 90 | 90 | 90 | 90 | 90 | 90 | 90 | | | 100 | |
| | Polyamide (P-2) | | | | | | | | | 90 | 90 | | 100 |
| | Graft-modified ethylene/1-octene copolymer (X-1) | 10 | | | | | | | | 10 | | | |
| | Graft-modified ethylene/1-octene copolymer (X-2) | | 10 | | | | | | | | | | |
| | Graft-modified ethylene/1-octene copolymer (X-3) | | | 10 | | | | | | | | | |
| | Graft-modified ethylene/1-octene copolymer (X-4) | | | | 10 | | | | | | | | |

(continued)

| | | Example 5 | Example 6 | Example 7 | Example 8 | Comparative Example 5 | Comparative Example 6 | Comparative Example 7 | Comparative Example 8 | Example 9 | Comparative Example 9 | Comparative Example 10 | Comparative Example 11 |
|---|---|---|---|---|---|---|---|---|---|---|---|---|---|
| | Graft-modified ethylene/1-octene copolymer (Y-1) | | | | | 10 | | | | | 10 | | |
| | Graft-modified ethylene/1-octene copolymer (Y-2) | | | | | | 10 | | | | | | |
| | Graft-modified ethylene/1-octene copolymer (Y-3) | | | | | | | 10 | | | | | |
| | Graft-modified ethylene/1-octene copolymer (Y-4) | | | | | | | | 10 | | | | |

(continued)

| | | Example 5 | Example 6 | Example 7 | Example 8 | Comparative Example 5 | Comparative Example 6 | Comparative Example 7 | Comparative Example 8 | Example 9 | Comparative Example 9 | Comparative Example 10 | Comparative Example 11 |
|---|---|---|---|---|---|---|---|---|---|---|---|---|---|
| Physical properties | Charpy impact value at normal temperature (kJ/$m^2$) | 16.7 | 15.0 | 15.7 | 16.6 | 16.5 | 13.4 | 13.0 | 12.9 | 19.5 | 18.0 | 4.9 | 5.7 |
| | Charpy impact value at low temperature (kJ/$m^2$) | 9.2 | 9.3 | 6.8 | 7.2 | 7.6 | 5.1 | 8.5 | 8.3 | 11.8 | 10.0 | 2.7 | 2.4 |
| | Spiral flow (cm) | 77 | 68 | 66 | 66 | 65 | 79 | 71 | 70 | 64 | 63 | 74 | 74 |

**Claims**

1. A graft-modified ethylene-based polymer (X) formed by graft modification of an ethylene/$\alpha$-olefin copolymer (A) satisfying requirements (A-i) to (A-iv) below with a polar compound:

   (A-i) a content of a structural unit (a) derived from ethylene is 51 to 99 mol%, and a content of a structural unit (b) derived from an $\alpha$-olefin having 5 to 20 carbon atoms is within a range of 1 to 49 mol%, provided that a sum of the structural unit (a) and the structural unit (b) is 100 mol%,
   (A-ii) a density is within a range of 0.850 to 0.875 g/cm$^3$,
   (A-iii) a melt flow rate (MFR) at 190°C and at a load of 2.16 kg is within a range of 0.1 to 25 g/10 min, and
   (A-iv) a sum of numbers of a vinyl-type double bond, a vinylidene-type double bond, a disubstituted olefin-type double bond and a trisubstituted olefin-type double bond per 1000 carbon atoms obtained by $^1$H-NMR is 0.16 to 1.00.

2. The graft-modified ethylene-based polymer (X) according to claim 1, wherein the polar compound is at least one polar compound selected from a hydroxyl group-containing ethylenically unsaturated compound, an amino group-containing ethylenically unsaturated compound, an epoxy group-containing ethylenically unsaturated compound, an aromatic vinyl compound, an unsaturated carboxylic acid and a derivative thereof, a vinyl ester compound, and vinyl chloride.

3. The graft-modified ethylene-based polymer (X) according to claim 1 or 2, wherein the ethylene/$\alpha$-olefin copolymer (A) is an ethylene/1-octene copolymer.

4. The graft-modified ethylene-based polymer (X) according to any one of claims 1 to 3, wherein the graft-modified ethylene-based polymer (X) satisfies requirements (X-i) and (X-ii):

   (X-i) $MFR_{10}/MFR_{2.16}$ is 10 or more, wherein $MFR_{10}$ is a melt flow rate measured at 190°C and at a load of 10 kg by the method of ASTM D1238, and $MFR_{2.16}$ is a melt flow rate measured at 190°C and at a load of 2.16 kg by the method of ASTM D1238, and
   (X-ii) a graft amount of the polar compound is 0.1 to 3 mass%.

5. A graft-modified ethylene-based polymer (X), wherein the graft-modified ethylene-based polymer (X) is a maleic anhydride graft-modified ethylene/1-octene copolymer satisfying requirements (X-i) and (X-iii) to (X-vi) below:

   (X-i) $MFR_{10}/MFR_{2.16}$ is 10 or more, wherein $MFR_{10}$ is a melt flow rate measured at 190°C and at a load of 10 kg by a method of ASTM D1238, and $MFR_{2.16}$ is a melt flow rate measured at 190°C and at a load of 2.16 kg by the method of ASTM D1238,
   (X-iii) a graft amount of a maleic anhydride is within a range of 0.1 to 3 mass%,
   (X-iv) a content of a structural unit (a) derived from ethylene is 51 to 99 mol%, and a content of a structural unit (b) derived from 1-octene is within a range of 1 to 49 mol%, provided that a sum of the structural unit (a) and the structural unit (b) is 100 mol%,
   (X-v) a density is within a range of 0.860 to 0.880 g/cm$^3$, and
   (X-vi) a melt flow rate (MFR) at 190°C and at a load of 2.16 kg is within a range of 0.1 to 25 g/10 min.

6. A polyamide composition comprising: a polyamide (P) within a range of 50 to 99 mass%; and a graft-modified ethylene-based polymer selected from the graft-modified ethylene-based polymer (X) according to any one of claims 1 to 4 and the maleic anhydride graft-modified ethylene/1-octene copolymer according to claim 5 within a range of 1 to 50 mass%, provided that a sum of the polyamide (P) and the graft-modified ethylene-based polymer (X) or the maleic anhydride graft-modified ethylene/1-octene copolymer is 100 mass%.

7. The polyamide composition according to claim 6, wherein the polyamide (P) is an aliphatic polyamide.

8. The polyamide composition according to claim 6 or 7, wherein the polyamide (P) comprises one or more selected from the group consisting of 6 nylon and 6,6 nylon.

9. A pellet comprising the graft-modified ethylene-based polymer (X) according to any one of claims 1 to 4 or the maleic anhydride-modified ethylene/1-octene copolymer according to claim 5.

**10.** A shaped product comprising the graft-modified ethylene-based polymer (X) according to any one of claims 1 to 4 or the maleic anhydride-modified ethylene/1-octene copolymer according to claim 5.

**11.** A shaped product comprising the polyamide composition according to any one of claims 6 to 8.

**INTERNATIONAL SEARCH REPORT**

International application No. **PCT/JP2022/001030**

**A. CLASSIFICATION OF SUBJECT MATTER**

***C08F 8/00***(2006.01)i; ***C08F 8/46***(2006.01)i; ***C08F 210/16***(2006.01)i; ***C08F 255/02***(2006.01)i; ***C08L 23/26***(2006.01)i; ***C08L 51/06***(2006.01)i; ***C08L 77/00***(2006.01)i
FI: C08F8/00; C08F255/02; C08L77/00; C08F8/46; C08L23/26; C08L51/06; C08F210/16

According to International Patent Classification (IPC) or to both national classification and IPC

**B. FIELDS SEARCHED**

Minimum documentation searched (classification system followed by classification symbols)

C08F8/00; C08F8/46; C08F210/16; C08F255/02; C08L23/26; C08L51/06; C08L77/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2020/230827 A1 (ASAHI KASEI KABUSHIKI KAISHA) 19 November 2020 (2020-11-19)<br>claims, paragraphs [0075], [0082], [0129], [0136]-[0137], [0153] | 1-11 |
| X | JP 2005-139467 A (MITSUI CHEMICALS INC) 02 June 2005 (2005-06-02)<br>paragraphs [0091]-[0099] | 1-5, 9-10 |
| A | | 6-8, 11 |
| X | JP 2020-161825 A (DOW MITSUI POLYCHEMICALS CO LTD) 01 October 2020 (2020-10-01)<br>paragraphs [0129]-[0132] | 1, 3, 9-10 |
| A | | 2, 4-8, 11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 March 2022** | **22 March 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/001030**

| Patent document cited in search report | Publication date (day/month/year) | Patent family member(s) | Publication date (day/month/year) |
|---|---|---|---|
| WO 2020/230827 A1 | 19 November 2020 | (Family: none) | |
| JP 2005-139467 A | 02 June 2005 | (Family: none) | |
| JP 2020-161825 A | 01 October 2020 | EP 3255682 A1<br>paragraphs [0194]-[0197]<br>TW 201640693 A<br>KR 10-2017-0103922 A<br>CN 107408593 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019035030 A
- JP 2000345031 A
- JP 2008095066 A
- JP 2011148267 A